# EUROPÄISCHE PATENTANMELDUNG

(11) **EP 1 238 743 A1**
(43) Veröffentlichungstag der Anmeldung: **11.09.2002**
(21) Anmeldenummer: 01105518.3
(22) Anmeldetag: 06.03.2001
(51) Int. Cl.: B23K 26/00, C03B 33/10, C03B 33/07, B28D 1/22

(54) **Verfahren zur Anbringung von Sollbruchkanten an einem Werkstück**

(71) Anmelder: Vitro Laser GmbH, 32423 Minden (DE)
(72) Erfinder: Wienkamp, Andreas, 32429 Minden (DE); Renaud, Remy, 32479 Hille (DE)

(57) **Zusammenfassung**

Bei der Anbringung von Sollbruchkanten an einem Werkstück wirkt ein Strahl hoher Leistungsdichte örtlich entlang der vorgesehenen Sollbruchkante auf das Werkstück ein.

Um insbesondere bei höheren Materialstärken und Verbundwerkstücken eine Sollbruchkante auszubilden, die ein definiertes Trennen des Werkstückes ermöglicht, ist erfindungsgemäß vorgesehen, den Strahl in einem Wirkvolumen im Inneren des Werkstückes mit Abstand von dessen Oberfläche zu fokussieren. Die Sollbruchkante wird durch Aneinanderreihung von Wirkvolumina gebildet.

## Beschreibung

Die Erfindung betrifft ein Verfahren zur Anbringung von Sollbruchkanten an einem Werkstück der im Oberbegriff des Anspruchs 1 angegebenen Gattung.

Sollbruchkanten werden beispielsweise bei scheibenförmigen Werkstücken vorgesehen, um später durch Biegung oder ähnliche Materialbeanspruchung des Werkstückes auf einfache Weise mit einer vordefinierten Bruchkante zu trennen. Dabei ist bekannt, an den Oberflächen des Werkstückes Vertiefungen entlang der vorgesehenen Sollbruchkante anzubringen. Auf diese Weise wird die Wandstärke des Werkstückes verringert und so die Biegesteifigkeit des Werkstückes im Bereich der Sollbruchkante geschwächt.

Die Sollbruchkanten können angebracht werden, indem mit einem Strahl hoher Leistungsdichte örtlich entlang der vorgesehenen Sollbruchkante auf das Werkstück eingewirkt wird. Mit einem Laserstrahl werden bei bekannten Verfahren Löcher in die Oberfläche des Werkstückes eingebracht und durch Aneinanderreihung von Löchern eine Einritzung der Oberfläche entlang der vorgesehenen Sollbruchkante vorgenommen. Die Löcher werden dabei derart aneinandergereiht, daß bei späterer Biegung die Bruchkanten in den gewünschten Richtungen verlaufen. Mit Laserbearbeitung können Sollbruchkanten durch Einritzungen oder Perforationen genau ausgebildet werden.

Bei größeren Materialstärken, welche im Bereich der Sollbruchstelle zu durchtrennen sind, sind meist sehr tiefe Einritzungen erforderlich, um ein sauberes Brechen entlang der Sollbruchkante zu ermöglichen. Die tiefen Einritzungen erfordern einen hohen Bearbeitungs- und Energieaufwand. Darüber hinaus ist die Anbringung von Sollbruchstellen durch Einritzen der Oberflächen bei Verbundwerksktücken problematisch, welche aus mehreren zusammengefügten Schichten bestehen. Dabei werden ausschließlich die außen liegenden Materialschichten mechanisch mit Sollbruchstellen versehen. Beim Trennen der Werkstücke brechen dabei oft nur die außen liegenden Schichten. Die innere Schicht, die nicht mit einer Sollbruchstelle versehen ist, bricht dabei unkontrolliert und trägt oft Schäden davon.

Der vorliegenden Erfindung liegt die Aufgabe zugrunde, ein Verfahren zur Anbringung von Sollbruchkanten mittels Strahlen hoher Leistungsdichte zu schaffen, mit dem eine Sollbruchkante ausgebildet wird, die insbesondere bei höheren Materialstärken und Verbundwerkstücken ein definiertes Trennen des Werkstückes an der vorgesehenen Bruchkante ermöglicht.

Diese Aufgabe wird erfindungsgemäß mit den Merkmalen des Patentanspruchs 1 gelöst.

In dem Werkstückmaterial, das für den Strahl durchlässig ist, wird der Strahl in einem Wirkvolumen fokussiert, wobei oberhalb eines materialspezifischen Kennwertes des Leistungsdichte eine Energieabsorbtion stattfindet. Die absorbierte Energie wird zum größten Teil in Wärme umgesetzt, wodurch sich innerhalb des Wirkvolumens das Material des Werkstückes örtlich rasch aufwärmt. Unter dem Wärmeeinfluß verändert sich die Werkstoffstruktur und in der Folge eines Crackens von Molekülen oder der Bildung von Gaskavitäten wird eine Schwächung der Festigkeit in diesem Wirkvolumen erzielt. Durch eine Aneinanderreihung von Wirkvolumina wird die Sollbruchkante innerhalb des Werkstückes gebildet. Die Sollbruchkante kann dabei in beliebigem Abstand von der Oberfläche des Werkstückes vorgesehen sein, indem der Strahl in entsprechender Eindringtiefe im Werkstoff fokussiert wird und so das Wirkvolumen dort hingelegt wird. Zweckmäßig wird zur erfindungsgemäßen Anbringung von Sollbruchkanten innerhalb des Werkstückes ein Laserstrahl eingesetzt. Die Materialerwärmung aufgrund der Absorbtion der Laserstrahlung in dem Wirkvolumen führt bei mineralischen Gläsern und ähnlichen Materialien zur Bildung von Rissen und Kavitäten im Material. In dem Material, welches die zur Anbringung von Sollbruchkanten geschwächten Bereich umgibt, treten aufgrund der Hohlraumbildung und Materialverdrängung in den Wirkvolumina Druckspannungen auf, welche die definierte Trennbarkeit im Bereich der Sollbruchkante unterstützen.

Vorteilhaft werden mehrere Wirkvolumina auf gleicher Höhe der vorgesehenen Sollbruchkante in unterschiedlichen Tiefen gegenüber der Oberfläche des Werkstückes vorgesehen, um das Werkstück im Bereich der Sollbruchkante gezielt zu schwächen. Die Sollbruchkante wird durch Perforation des Werkstückes gebildet, wobei die Abstände der Wirkvolumina entsprechend der vorgesehenen Bruchkraft zum Trennen des Werkstückes eingestellt wird. Ist eine leichte Trennbarkeit, die oft irrtümlich auftreten kann, unerwünscht, so werden Perforationen des Werkstückes mit großen Abständen der Wirkvolumina eingestellt. Vorteilhaft kann das erfindungsgemäße Verfahren auch zum Trennen des Werkstückes eingesetzt werden, wobei die Wirkvolumina entsprechend dicht benachbart angeordnet werden, daß sich eine durchgehende Linie ergibt.

In weiterer Ausgestaltung der Erfindung wird das Werkstück zusätzlich auf Höhe der Sollbruchkante mindestens an einer seiner Oberflächen geritzt. Wird das Werkstück gebogen, so treten die Spannungen in der Sollbruchkante ausschließlich in dem verbleibenden Material zwischen der Einritzung der Oberfläche und der erfindungsgemäß im Inneren vorgesehenen Sollbruchkante auf, wodurch sich eine besonders saubere Bruchkante ergibt. Die Einritzung an der Oberfläche kann durch Laserbearbeitung erfolgen, wobei jedoch auch Bearbeitungsverfahren mit mechanischem Kontakt mit der Oberfläche vorteilhaft sein können. Die Einritzungen der Oberfläche können auch vorteilhaft mittels Wasserstrahlen ausgebildet werden.

Das erfindungsgemäße Verfahren wird besonders vorteilhaft zur Anbringung von Sollbruchkanten an Verbundwerkstücken eingesetzt. Bei mehrlagigen Verbundwerkstücken kann mit den erfindungsgemäßen Maßnahmen auf die innen liegenden Materialschichten, welche vollständig von den äußeren Schichten abgedeckt liegen, eingewirkt werden.

Ein Ausführungsbeispiel der Erfindung ist nachstehend anhand der Zeichnungen näher erläutert. Es zeigen:
- Fig. 1:: ein scheibenförmiges Werkstück, an dem eine Sollbruchkante angebracht wird,
- Fig. 2:: einen Querschnitt durch ein scheibenförmiges Werkstück und
- Fig. 3:: einen Querschnitt durch ein Verbundwerkstück mit drei Materialschichten.

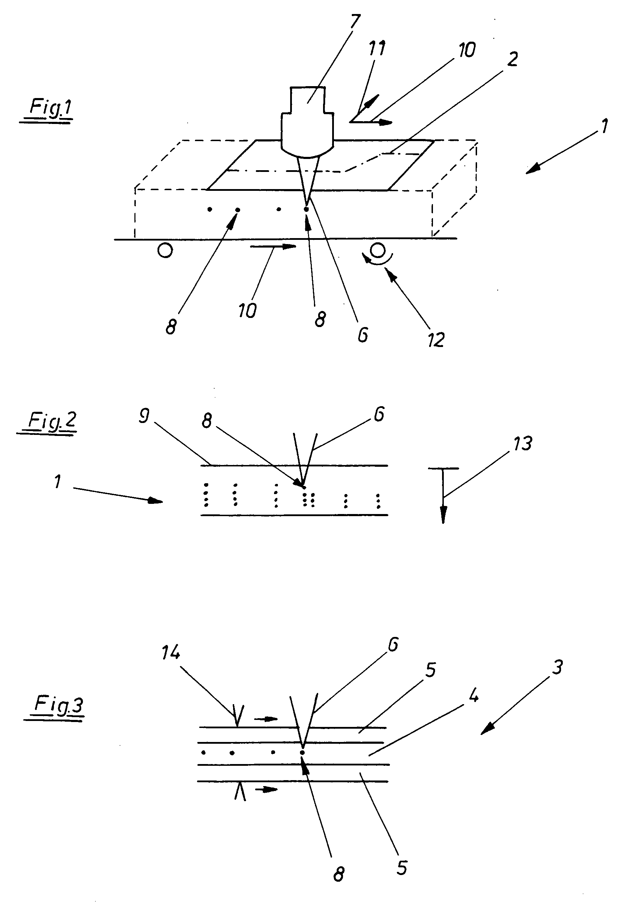

Fig. 1 zeigt eine ebene Glasplatte 1, bei der mittels eines Laserstrahls 6 eine Sollbruchkante 2 angebracht wird. Der Laserstrahl 6 wird in einem Werkzeugkopf 7 erzeugt und in einem Wirkvolumen 8 fokussiert, welches innerhalb der Glasplatte 1 mit Abstand zu der Oberfläche der Glasplatte 1 liegt. Die Glasplatte 1 ist für den Laserstrahl 6 durchdringbar und im Wirkvolumen 8 wird durch lokale Erwärmung das Material verändert und in seiner Festigkeit geschwächt. Bei mineralischen Gläsern oder transparenten Kunststoffen wie zum Beispiel PMMA führt die Einwirkung des Laserstrahls 6 im Wirkvolumen zur Bildung von Rissen und Hohlräumen im Material. Die Sollbruchkante 2 wird durch Aneinanderreihung mehrerer Wirkvolumina 8 gebildet, in denen jeweils durch den Einfluß des Laserstrahls 6 eine Materialschädigung herbeigeführt wird. Durch entsprechende Aneinanderreihung der punktförmigen Materialschwächungen in den Wirkvolumina 8 des Laserstrahls 6 können Sollbruchkanten 2 mit beliebiger Kontur angebracht werden, beispielsweise bogenförmige Linien wie in der Fig. 1 angedeutet. Zur Anbringung der Sollbruchkante 2 wird die Glasplatte 1 relativ zum Werkzeugkopf 7 bewegt. Dabei kann der Werkzeugkopf 7 entlang der vorgesehenen Sollbruchkante 2 über die Glasplatte 1 gefahren werden und ist in einer entsprechenden Werkzeugmaschine in Längsrichtung 10 und in Querrichtung 11 der Werkzeugplatte bewegbar.

Alternativ oder ergänzend ist auch möglich, die Glasplatte auf einem entsprechend bewegbaren Werkzeugtisch aufzuspannen, dem ein entsprechender Stellantrieb 12 zugeordnet ist.

Mit der erfindungsgemäßen Anbringung der Sollbruchkanten durch Materialschädigungen im Inneren können saubere Bruchkanten bei scheibenförmigen Werkstücken wie der gezeigten Glasplatte 1, beispielsweise Floatglas oder Verbundglas, erreicht werden. Auch bei voluminösen Körpern wie zum Beispiel Glaswürfeln oder Rohdiamanten kann ein sauberes Trennen und Teilen über die gezielte Anbringung der Sollbruchkante durch Materialschädigung im Inneren durchgeführt werden. Die Wirkvolumina werden in einstellbaren Abständen entlang der gewünschten Sollbruchkante 2 plaziert. Bei einer hohen Dichte und entsprechend nah benachbart liegenden Wirkvolumina 2 kann auch eine sofortige Trennung des Materials erfolgen. Bei geringerer Dichte der Wirkvolumina 2 ist zum Trennen der beiden Abschnitte der Glasplatte 1 an der Sollbruchkante 2 eine entsprechende Biegekraft aufzubringen.

Fig. 2 zeigt einen Querschnitt durch eine Glasplatte 1, bei der entlang der vorgesehenen Sollbruchkante mehrere Wirkvolumina in gleicher Höhe der Sollbruchkante, jedoch unterschiedlicher Tiefe 13 vorgesehen sind. Dabei werden mit dem Laserstrahl 6 mehrere in unterschiedlichen Abständen zur Oberfläche 9 liegende Stellen bearbeitet. Die Fokussierung des Laserstrahls 6 in verschiedene Eindringtiefen ergibt dabei in Überdeckung liegende Wirkvolumina 8, in denen jeweils das Material der Glasplatte 1 geschwächt wird. Dadurch können insbesondere bei größeren Materialstärken perforierte Sollbruchkanten ausgebildet werden, die eine Trennung mit sauberen Bruchkanten ermöglichen.

Bei dem in Fig. 3 dargestellten Verbundglas 3 wird mit dem Laserstrahl 6 die innen liegende Glasscheibe 4 bearbeitet, welche auf beiden Seiten von einer Außenschicht 5 abgedeckt ist. Mit dem erfindungsgemäßen Verfahren kann eine Sollbruchkante in der innen liegenden Scheibe 4 ausgebildet werden, ohne hierfür zuvor die Außenschichten 5 mechanisch bearbeiten zu müssen. Dabei durchdringt der Laserstrahl 6 die außen liegenden Schichten und wird in den Wirkvolumina 8 innerhalb der Scheibe 4 fokussiert.

Die äußeren Materialschichten 5 werden auf ihren Außenseiten auf Höhe der vorgesehenen Sollbruchkante 2 mit einem entsprechenden Werkzeug 14 eingeritzt. Dazu kann ein Werkzeug vorgesehen sein, welches mechanisch in das Verbundglas 3 eindringt. Besonders vorteilhaft werden jedoch auch die Einritzungen der Außenschichten durch das Laserwerkzeug vorgesehen, mit dem die eingeschlossenen Materialschädigungen in der innen liegenden Glasplatte 4 ausgebildet werden. Die Bearbeitung der innen liegenden Glasplatte 4 und die Einritzung der Außenschichten 5 erfolgt zweckmäßig gleichzeitig, wobei in allen übereinander liegenden Schichten des Verbundglases 3 durchgängig Sollbruchkanten ausgebildet werden.

## Patentansprüche

1. Verfahren zur Anbringung von Sollbruchkanten an einem Werkstück, wobei auf das Werkstück mit einem Strahl hoher Leistungsdichte örtlich entlang der vorgesehenen Sollbruchkante eingewirkt wird,
**dadurch gekennzeichnet,**
**daß** der Strahl (6) in einem Wirkvolumen (8) im Inneren des Werkstückes (1, 3) mit Abstand von dessen Oberfläche (9) fokussiert wird und die Sollbruchkante (2) durch Aneinanderreihung von Wirkvolumina (8) gebildet wird.

2. Verfahren nach Anspruch 1, **dadurch gekennzeichnet, daß** das Werkstück (1, 3) auf Höhe der vorgesehenen Sollbruchkante in mehreren Tiefen gegenüber der Oberfläche (9) bearbeitet wird.

3. Verfahren nach Anspruch 1 oder 2, **dadurch gekennzeichnet, daß** die Sollbruchkante (2) durch Perforation des Werkstückes (1, 3) gebildet wird, wobei die Abstände der Wirkvolumina (8) entsprechend der vorgesehenen Bruchkraft zum Trennen des Werkstückes eingestellt wird.

4. Verfahren nach einem der Ansprüche 1 bis 3, **dadurch gekennzeichnet, daß** die Wirkvolumina (8) derart dicht benachbart angeordnet werden, daß das Werkstück (1, 3) getrennt wird.

5. Verfahren nach einem der Ansprüche 1 bis 4, **dadurch gekennzeichnet, daß** der Strahl (6) ein Laserstrahl ist.

6. Verfahren nach einem der Ansprüche 1 bis 5, **dadurch gekennzeichnet, daß** das Werkstück (1, 3) zusätzlich auf Höhe der Sollbruchkante (2) mindestens an einer seiner Oberflächen (9) geritzt wird.

7. Verfahren nach einem der Ansprüche 1 bis 6, **gekennzeichnet durch** die Verwendung des Verfahrens bei Verbundwerkstücken (3), welche aus mehreren Materialschichten (4, 5) gefügt sind, wobei der Strahl (6) bei der Bearbeitung einer Materialschicht (4) die dem Strahl erzeugenden Werkzeugkopf (6) zugewandten Materialschichten (5) durchdringt.

8. Verfahren nach Anspruch 6 und 7, **dadurch gekennzeichnet, daß** die Einritzung der Oberfläche (9) des Werkstückes (3) und die Anbringung einer Sollbruchkante (2) im Inneren einer Materialschicht (4) gleichzeitig erfolgt.
